# EUROPEAN PATENT SPECIFICATION

(11) **EP 1 774 879 B1**
(45) Date of publication and mention of the grant of the patent: **24.09.2008**
(21) Application number: 05425726.6
(22) Date of filing: 17.10.2005
(51) Int. Cl.: A47J 31/06

(54) **Supplying group for infusion machine allowing the use of different coffee packaging types**
Vorrichtung für Kaffeemaschine um den Gebrauch von gemahlenem Kaffee oder Einzelverpackungen zu erlauben
Groupe pour machine à café permettant d'utiliser du café moulu ou des galettes de café préemballées

(43) Date of publication of application: 18.04.2007
(73) Proprietor: Eugenia S.R.L., 20025 Legnano MI (IT)
(72) Inventor: Rancilio, Roberto, c/o Rancilio Macchine per Caffe S.P.A., 20010 Villastanza di Parabiago (MI) (IT)
(74) Representative: Robba, Pierpaolo

(56) References cited:
- US-A- 5 870 943

## Description

### Technical Field

The present invention relates, in general, to an infusion machine, to a supplying group for such machine, to a head unit usable in combination with such supplying group and to a method for manufacturing such supplying group.

In particular, the present invention relates to infusion machines of the so-called "professional" type, that are used in the field of espresso coffee machines; more particularly the present invention relates to machines in the professional field where use of pressed coffee powder (ground coffee) or coffee in the so-called pre-packaged paper pod (coffee pod) or coffee in the so-called disposable filter or pre-packaged plastic pod (coffee cartridge) is required.

### Background Art

Infusion machines are known in the art, in particular espresso coffee machines are known that are apt to operate either with ground coffee or coffee pod.

For instance an espresso coffee machine is known from Publication EP_0070403 having a conventional supplying group, and usable with ground coffee, to which a proper removable adaptor can be applied adapted to manufacture a coupling element for a pod holder device and having a cavity apt to accommodate the pod contained in the pod holder device.

Such a solution, requiring the presence of the adaptor interposed between the supplying group and pod holder device has both the problem that it reduces, as easily comprehensible, the space available for inserting a cup under the supplying group and, therefore, for coffee preparation, and the problem that it constitutes, in any case, the adaptation of a machine preferably configured for ground coffee use for a different use.

In an analogous and opposite way, a supplying device is known from Publication EP_0814692 adapted to be hooked by a pod holder device and having a cavity apt to accommodate the pod contained in the pod holder device.

Such supplying device may be modified in order to operate with ground coffee by applying a filter for ground coffee, onto the cavity,.

Even this type of solution has the problem of being, in any case, the adaptation of a machine preferably configured for using coffee pod for a different use.

A further problem of such solution is that this type of supplying device, being not modifiable in its dimensions, is usable for a single pod type, while, as known, the pods on sale are usually of different dimensions.

Document US-A-5 870 943 discloses an infusion machine, a supplying group and a head unit according to the preambles of independent claims 1, 6, 11 respectively.

In general, Applicant finds that, in order to face the need to have infusion machines, in particular espresso coffee machines, usable with coffee having different packaging types, for instance ground coffee or coffee pod, background art teaches to adapt machines configured for using one determined coffee packaging type, for instance ground coffee, and to adapt them for the use with another coffee packaging type, for instance coffee pod.

### Disclosure of the Invention

Object of the present invention is to meet the requirement of use of different coffee packaging types on sale more satisfactorily and preferably in a more complete way by providing, for instance, the use of ground coffee, coffee pod and coffee cartridge.

This object is achieved by means of the infusion machine as claimed.

The present invention relates also to a supplying group for infusion machines, to head unit arranged to co-operate for forming a supplying group and to a method for manufacturing a supplying group as claimed.

The Claims are an integral part of the teaching of the present invention.

According to the present invention the infusion machine comprises a supplying group having a head unit having a first element of a shape substantially independent from the packaging type of the infusion powder and a second element having a shape depending on the packaging type of the infusion powder and being removably connectable to the first element.

According to a further characteristic of the present invention, the machine and the supplying group comprise a filter-holder unit having a filter-holder device of a shape substantially independent from the packaging type of the infusion powder and a filtering element removably connectable to the filter-holder device and having a shape depending on the packaging type of the infusion powder.

According to still another characteristic of the present invention, the second element of the head unit comprises a threaded rod arranged to be inserted into a properly arranged hole of the first element of the head unit in order to allow fixing the second element to the first one.

### Brief Description of Drawings

These and further features and advantages of the present invention will appear more clearly from the following detailed description of a preferred embodiment, provided by way of non-limiting example with reference to the attached drawings, wherein components designated by same or similar reference numerals indicate components having same or similar functionality and construction and wherein:
Fig. 1 shows a general draft of a "professional" infusion machine;
Fig. 2 shows an overall perspective view of configurations that can be combined with the supplying group according to the present invention;
Fig. 3a shows a perspective view of a first configuration kit for a supplying group according to the invention;
Fig. 3b shows a perspective view of a second configuration kit for a supplying group according to the invention;
Fig. 3c shows a perspective view of a third configuration kit for a supplying group according to the invention;
Fig. 4a shows a filter-holder device usable with the supplying group according to the invention, that uses the first configuration kit of Fig. 3a;
Fig. 4b shows a filter-holder device usable with the supplying group according to the invention, that uses the second configuration kit of Fig. 3b;
Fig. 4c shows a filter-holder device usable with the supplying group according to the invention, that uses the third configuration kit of Fig. 3c.

### Best Mode for Carrying Out the Invention

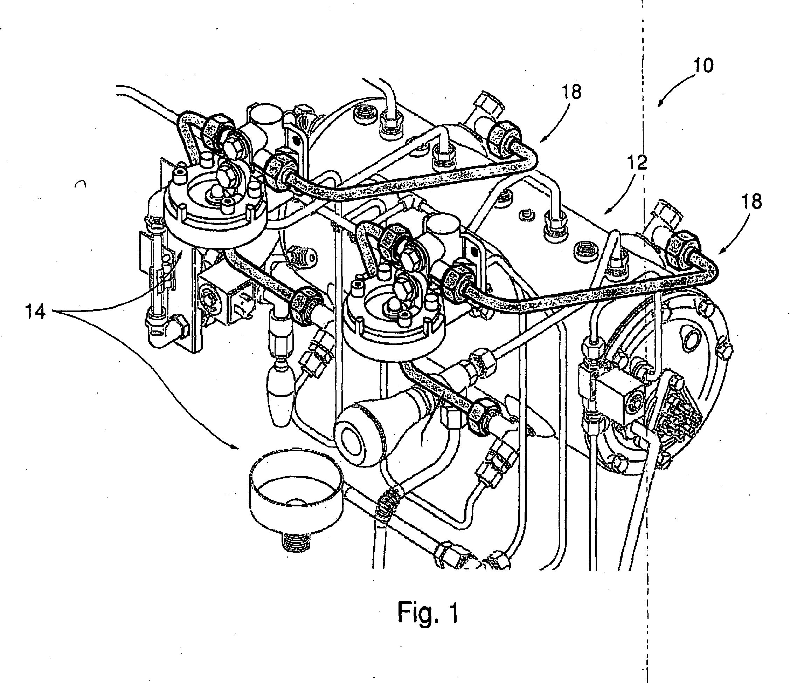

With reference to Fig. 1 an infusion machine (machine) 10, for instance a machine of professional type for espresso coffee preparation, to which reference is made hereinafter for ease of description, comprises a boiler 12 arranged to heat and keep under pressure a determined water amount, one or more supplying groups 14 and a plurality of pipes arranged to connect, in a known way, the boiler 12 to the one or more supplying groups 14.

The supplying group 14 is arranged to receive hot water under pressure from the boiler 12 upon command for instance by one operator and to supply a coffee infusion (espresso coffee) by using, in the supplying group 14, coffee in several coffee packaging types, such as pressed coffee powder (ground coffee), coffee pod or coffee cartridge.

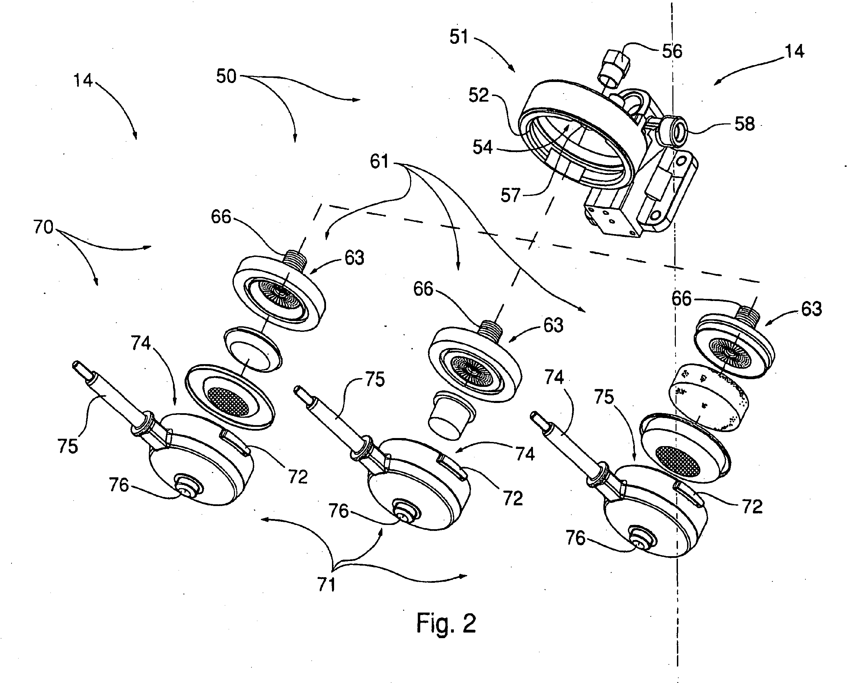

According to a preferred embodiment of present invention, the supplying group 14 comprises a head unit or block 50 (Fig. 2) and a filter-holder unit or block 70 arranged to co-operate so as to form an infusion chamber for the preparation of espresso coffee.

The head block 50, for instance made of metal, such as brass, copper, iron or steel, etc., comprises an upper head 51 and a lower head 61.

The upper head 51 comprises coupling guides (guides) 52, of known type, apt to be coupled, in a known way, to corresponding wings 72, of known type, comprised in the filter-holder block 70.

The upper head 51 also comprises a cavity 54 apt to accommodate the lower head 61 and, in the preferred embodiment, a through hole 57, for instance located in the centre of the cavity 54, arranged to accommodate, as it will be disclosed later on in detail, a threaded rod 66 fixed to the lower head 61.

The upper head 51 further comprises one or more ducts 58, of known type, connected to the pipes 18 (Fig. 1, Fig. 2), and arranged to make hot water under pressure flow into the head block 50.

The upper head 51, according to the preferred embodiment, has a single configuration independent from the coffee packaging type used with the machine 10.

The lower head 61, according to the preferred embodiment, comprises the threaded rod 66, which besides being threaded at one end comprises at its base a stem having preferably an inner thread.

The lower head is configurable so as to have various shapes depending on the coffee packaging type, for instance pod, cartridge or ground coffee and/or on the packaging dimensions for the same packaging type, for instance pods or cartridges of different dimensions.

In the following description three examples are disclosed that take into consideration three coffee packaging types.

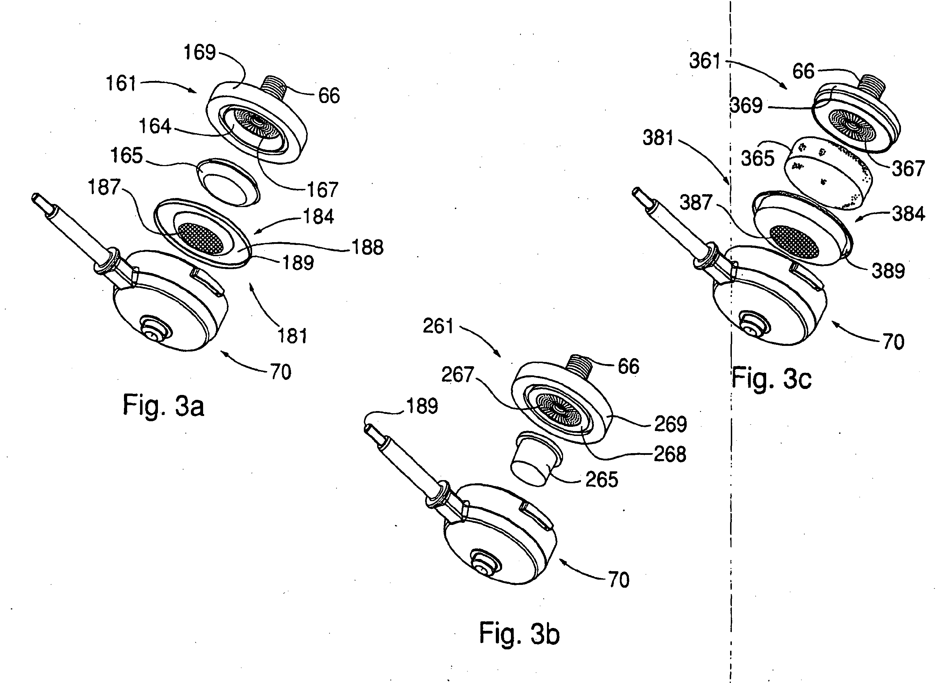

In a first configuration (shown also in Fig. 3a), for instance, the lower head 61 is shaped as lower head for using coffee pods (pod head) 161 and comprises a cavity 164 of predetermined dimensions and apt to accommodate a predetermined type of pod 165, the threaded rod 66, a filter 167 at the base of the cavity 164, for instance fixed by means of a screw to the inner thread of the threaded rod 66 and a sealing gasket 169 fixed, in a known way, to the edges of the cavity 164.

The threaded rod 66, for instance, is in a central position, for instance in a position opposite to the cavity 164, and is arranged to constitute a fixing element for fixing said rod to the upper head 51.

In particular, the pod head 161 is apt to be fixed to the upper head 51 by means of insertion of the threaded rod 66 into the through hole 57 and subsequent fixing to the upper head, for instance, by means of a threaded nut 56 of known type.

The sealing gasket 169 is apt to ensure sealing between upper head 51 and pod head 161 so that the water under pressure is forced to flow through the filter 167 during espresso coffee preparation.

In a second configuration (shown also in Fig. 3b), for instance, the lower head 61 is shaped as lower head for using coffee cartridges (cartridge head) 261 and comprises a first gasket 268 of predetermined dimensions and apt to face a predetermined type of cartridge 265, the threaded rod 66, a filter 267, associated to the first gasket 268 and, for instance, fixed by means of a screw to the inner thread of the threaded rod 66, and a second gasket (sealing gasket) 269; the threaded rod 66 is in a position opposite to the area facing the cartridge 265.

The threaded rod 66, preferably, is in a central position and is arranged to constitute a fixing element for fixing said rod to the upper head 51 in a way equivalent to the one already described.

The sealing gasket 269, in a way similar to the one already described, is apt to ensure sealing between upper head 51 and cartridge head 261 so that the water under pressure is forced to flow through the filter 267 during espresso coffee preparation, while the first gasket 268 is apt to ensure that the hot water under pressure passes through the cartridge 265 during infusion.

In a third configuration (shown also in Fig. 3c), for instance, the lower head 61 is shaped as lower head for using ground coffee (ground head) 361 and comprises the threaded rod 66, a filter 367 of predetermined dimensions, for instance fixed by means of a screw to the inner thread of the threaded rod 66 and arranged to face a predetermined amount of ground coffee (ground) 365 and a gasket (sealing gasket) 369.

The threaded rod 66, preferably, is in a central position, for instance in a position opposite to the area in which the filter 367 faces the ground coffee, and is arranged to constitute a fixing element for the upper head 51 in a way equivalent to the one already described.

The sealing gasket 369, in a way similar to the one already described, is apt to ensure sealing between upper head 51 and ground head 361 so that the water under pressure is forced to flow through the filter 367 during espresso coffee preparation.

Referring particularly to Fig. 2, the filter-holder block 70 for instance made of metal, such as brass, copper, iron or steel, etc. comprises, in the preferred embodiment, a filter-holder device (filter-holder) 71 and, depending on the packaging type of the coffee, a filtering element or filter.

The filter-holder 71 comprises the wings 72, for instance an handle 75 apt to be grasped by an operator in order to connect the filter-holder 71 to the upper head 51, upper external walls (external walls) 78 shaped as walls for supporting several filter types, and at least one nozzle 76 of a known type, through which the espresso coffee comes out, in a known way.

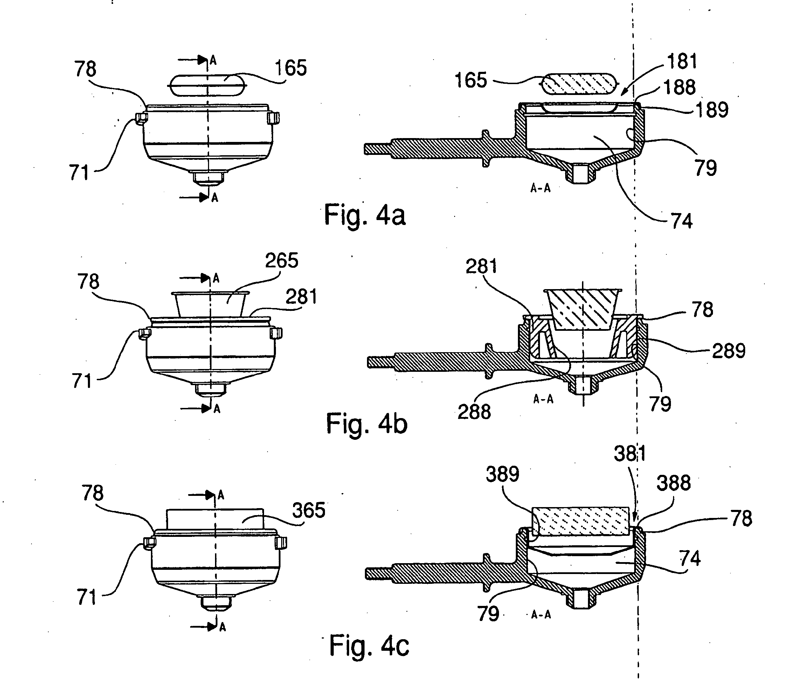

The filter-holder 71 further comprises a cavity 74 (visible in Fig. 4a, 4b, 4c) shaped so as to be able to accommodate, depending on the coffee packaging type, the filter.

The cavity 74 comprises inner side-walls 79, for instance of truncated cone cross-section.

The filter-older 71, according to the preferred embodiment, has a single configuration and, in particular, the cavity 74 and its side-walls 79 are shaped so as to be able to accommodate a plurality of filter types.

In the following description three examples are disclosed that take into consideration the three coffee packaging types already mentioned.

In a first configuration (Fig. 4a), for instance, the filter is shaped as filter for using coffee pods (pod filter) 181.

The pod filter 181 comprises a cavity 184 of predetermined dimensions and apt to accommodate a predetermined type of pod 165, a filtering component 187 located at the base of the cavity 184, a cavity edge 188, for instance planar, arranged to join together the cavity 184 and an external wall 189 shaped in order to co-operate with the external walls 78 of the filter-holder 71.

The pod filter 181 is arranged to be fixed to the filter-holder 71 by means of a light pressure exercised by an operator, thanks to the metal-to-metal sealing between the external wall 189 of the pod filter and the external walls 78 of the filter-holder 71.

In a second configuration (Fig. 4b), to be used for instance with coffee cartridges 265, no filter is provided to be associated with or fixed to the filter-holder 71 because the cartridge itself works as a filter. Obviously, in other embodiments where the cartridge has no such filtering function, it is possible to provide a filter adaptable to the filter-holder 71.

This embodiment provides, for instance, to use one or more adapters 281 shaped with external walls 289, apt to adhere to the inner side-walls 79 of the filter-holder, and with inner walls 288 apt to accommodate respective cartridges 265.

In a third configuration (Fig. 4c), the filter is shaped, for instance, as filter for using ground coffee (ground filter) 381.

The ground filter 381 comprises a cavity 384 of predetermined dimensions and apt to accommodate a predetermined quantity of ground coffee (ground) 365, a filtering component 387 located at the base of the cavity 384 and one external wall 389, for instance of truncated cone cross-section, shaped for cooperating with the external 78 and inner 79 side-walls of the filter-holder.

The ground filter 381 is arranged to be fixed to the filter-holder 71 by means of a light pressure exercised by an operator, thanks to the metal-to-metal sealing between the external wall 389 of the filter and the inner side-walls 79 of the filter-holder 71.

In summary, according to a preferred embodiment of the present invention, the supplying group 14 comprises two elements, the upper head 51 and the filter-holder device 71, that have a neutral structure, in the sense that they are not dependent in shape on the packaging type of the coffee and that, in use, they are connectable with each other. The supplying group 14 further comprises, in the preferred embodiment, at least one specialised element, for instance the lower head 61, that is arranged to form, once inserted between the two elements of neutral structure, an infusion chamber specific for a determined coffee packaging type.

According to the preferred embodiment, a second specialised element is provided at least in the case of coffee pod or ground coffee and comprises a specialised filtering element to be associated to the filter-holder device 71.

The operation of the machine 10 as described above is the following.

If the operator of the machine 10 has chosen to use mostly coffee packaged in pod, the operator will have, for instance, one or more pod kits at his disposal, each comprising a pod head 161 and a pod filter 181 and arranged to shape, respectively, one or more supplying groups for using coffee pods.

In order to be able to use the pod kit, in a first step the operator applies the pod head 161 to the upper head 51, by fixing it by means of the threaded nut 56 so as to form the head block 50.

In a second step the operator inserts the pod filter 181 into the cavity 74 of the filter-holder 71 so as to form the filter-holder block 70.

After such steps are completed, in a third step the operator proceeds to the insertion of a pod 165 having dimensions corresponding to those provided by the pod kit, in the filter-holder block 70 and connects it, in a known way, to the head block 50 so as to obtain, for instance, espresso coffee by activating the supply of water under pressure from the boiler 12 of machine 10.

If the operator wishes to pass from a first configuration, i.e. the use of a first packaging type, for instance the one described above, to a second configuration for using a second packaging type, for instance coffee cartridges, in a first step the operator, who will have for instance a cartridge kit at his disposal will proceed to remove the lower head 61 from the upper head 51 by unscrewing the threaded nut 56.

In a second step the operator, in a way similar to the one already described, applies the cartridge head 261 to the upper head 51 by fixing it by means of the threaded nut 56 so to form the head block 50.

In a third step the operator removes the pod filter 181 from the filter-holder 71 and, then, as use a cartridge filter is not provided, in a fourth step the operator inserts one cartridge into the filter-holder 71.

Subsequently in a fifth step, the operator connects, as already described, the filter-holder block 70, in a known way, to the head block 50 so as to obtain, for instance, an espresso coffee.

In a substantially equivalent way, if the operator wishes to pass from one of the configurations previously described to a configuration that provides to use ground coffee, the operator, as easily comprehensible to a technician in the field, will proceed to carry out the above described replacements by using, for instance, one or more kits for ground coffee, each comprising, for instance, the ground head 361 and the ground filter 381.

In summary, the change from the use of a packaging type to a different packaging type simply requires the application or substitution of at least one element, for instance the lower head of a supplying group.

The invention, according to the preferred embodiment, has been described as applied to coffee machines of the "professional" type, but, as easily comprehensible to a technician in the field, the described solution is in general applicable to any infusion machines in which it is provided that the substance (powder) for obtaining the infusion can be presented in different packaging types.

In the description reference has been made to a single type of coffee pod, but, as easily comprehensible to a technician in the field, the described solution is applicable to any types of pod, by suitably varying the dimensions of cavities 164 and 184 and of the lower head 161 and pod filter 181, respectively, without varying, however, the characteristics of the upper head and of the filter-holder device.

In the description and drawings reference has been made, preferably, to a single type of cartridges, but it is self-evident that different types of cartridge holders having inner cavities of different dimensions can be provided without varying, however, the dimensions and the characteristics of the filter-holder 71 and of the lower head 61.

In further embodiments it can also be provided that the filter-holder block 70, instead of comprising a filter-holder device 71 of neutral type and a specialised filter, 181 or 381, comprises a filter-holder device already specialised for the type of lower head mounted each time on the machine 10.

In such embodiments the different kits can comprise, for instance, a filter-holder block and a lower head.

In the description reference has been made to a threaded rod as fixing element of the lower head to the upper head, but obviously in other embodiments the threaded rod can be replaced, in the above described examples, by different fixing elements without departing from the scope of the above description.

For instance, as an alternative to the rod, a nut can be provided, preferably in a central area of the lower head, to be coupled to a screw to be inserted in a through hole provided in a corresponding area in the upper head, or, alternatively, the upper head can comprise a threaded rod to be inserted into a suitable hole provided in the lower head or similar variations.

Advantageously, the machine and the supplying group as described are of very simple construction, because for managing several packaging types of the infusion powder it is sufficient to specialise one or two elements of the supplying group, such as the lower head of the head unit and, if it is the case, the filter of the filter-holder unit.

Moreover the operations required for applying or replacing the several kits can be carried out, for instance, as easily comprehensible to a technician in the field, without powering off the machine or, instead, cooling it.

Furthermore, advantageously, the operations required for applying or replacing the several kits are surely fast, requiring, for instance, only to fix a nut to a threaded rod. Still more advantageously, in case of machines having a plurality of supplying groups, the operator will be able to use indifferently, as easily comprehensible to a technician in the field, different kits on the different supplying groups, whereby he will be able to choose a different type of use for different supplying groups of the machine.

Obvious changes and variations to the above disclosure are possible, as regards dimensions, shapes, materials, components, connections as well as details of the described construction and operation method without departing from the scope of the invention as defined by the claims that follow.

## Claims

1. Infusion machine comprising
- at least one boiler (12) for containing at least one liquid
- at least one supplying group (14) connected to the boiler (12) and comprising
- a head unit (50), and
- a filter-holder unit (70) arranged to be connected to said head unit(50) for forming an infusion chamber,
- said infusion chamber being apt to contain a substance suitable for producing an infusion,
- said substance being provided in at least two alternative packaging types selectable from the group formed by
- powder in pod;
- powder in cartridge;
- pressed powder;
wherein said head unit (50) comprises
- a first element (51) having a shape substantially independent from said alternative packaging types;
- a second element (61, 161, 261, 361) arranged to be removably connected to said first element (51) by means of a fixing element (66) and comprising coffee packaging dependent means (161, 261, 361) having a shape dependent from one of said at least two alternative packaging types and being associated to said fixing element; **characterised in that** said coffee packaging dependent means comprises a sealing gasket (169, 269, 369) suitable to ensure sealing between said first element (51) and said coffee packaging dependent means (161, 261, 361).

2. Machine according to claim 1 **characterised in that** said filter-holder unit (70) comprises
- a filter-holder device (71) having a shape substantially independent from said alternative packaging types and arranged to be connected to said first element (51) of said head unit (50).

3. Machine according to claim 2 **characterised in that** said filter-holder unit (70) comprises
- a filtering element (181, 381) arranged to be removably connected to said filter-holder device (71), and having a shape dependent from one of said at least two alternative packaging types.

4. Machine according to any one of claims 1 to 3 **characterised in that**
- said first element (51) comprises at least one through hole (57), and
- said fixing element comprises at least one rod (66) arranged to be inserted into said at least one through hole so as to be fixed to said first element.

5. Machine according to any one of claims 1 to 4 **characterised in that** said substance is coffee.

6. Supplying group for infusion machine (10) comprising
- a head unit (50),
- a filter-holder unit (70) arranged to be connected to said head unit (50) in order to form an infusion chamber,
- said infusion chamber being apt to contain a substance suitable for producing an infusion,
- said substance being provided in at least two alternative packaging types selectable at least from the group formed by
- powder in pod;
- powder in cartridge;
- pressed powder;
wherein said head unit (50) comprises
- a first element (51) having a shape substantially independent from said alternative packaging types;
- a second element (61, 161, 261, 361) arranged to be removably connected to said first element (51) by means of a fixing element (66) and comprising coffee packaging dependent means (161, 261, 361) having a shape dependent from one of said alternative packaging types and being associated to said fixing element; **characterised in that** said coffee packaging dependent means comprises a sealing gasket (169, 269, 369) suitable to ensure sealing between said first element (51) and said coffee packaging dependent means (161, 261, 361).

7. Supplying group according to claim 6 **characterised in that** said filter-holder unit (70) comprises
- a filter-holder device (71) having a shape substantially independent from said alternative packaging types and arranged to be connected to said first element (51) of said head unit (50).

8. Supplying group according to claim 7 **characterised in that** said filter-holder unit (70) comprises
- a filtering element (181, 381) arranged to be removably connected to said filter-holder device (71), and having a shape dependent from one of said alternative packaging types.

9. Supplying group according to any one of claims 6 to 8 **characterised in that**
- said first element (51) comprises at least one through hole (57) and
- said fixing element comprises at least one rod (66) arranged to be inserted into said at least one through hole so as to be fixed to said first element.

10. Supplying group according to any one of claims 6 to 9 **characterised in that** said substance is coffee.

11. Head unit arranged to co-operate with a filter-holder unit for forming an infusion chamber, in which said infusion chamber is apt to contain a substance suitable for producing an infusion and said substance is provided in at least two alternative packaging types selectable from the group formed by
- powder in pod;
- powder in cartridge;
- pressed powder;
said head unit comprising
- a first element (51) having a shape substantially independent from said alternative packaging types;
- a second element (61,) arranged to be removably connected to said first element (51)by means of a fixing element (66) and comprising coffee packaging dependent means (161, 261, 361) having a shape dependent from one of said at least two alternative packaging types and being associated to said fixing element; **characterised in that** said coffee packaging dependent means comprises a sealing gasket (169, 269, 369) suitable to ensure sealing between said first element (51) and said coffee packaging dependent means (161, 261, 361);

12. Head unit according to claim 11 **characterised in that**
- said first element (51) comprises at least one through hole (57) and
- said fixing element comprises at least one rod (66) arranged to be inserted into said at least one through hole for being fixed to said first element.

13. Method for manufacturing a supplying group (14) for an infusion machine apt to use a substance that is provided in at least two alternative packaging types, said two alternatives packaging types being selectable at least from the group formed by:
- powder in pod;
- powder in cartridge;
- pressed powder;
comprising the steps of
- forming a head unit (50) of said supplying group (14) by
- realising a first element (51) having a shape substantially independent from said alternative packaging types, and
- realising a second element (61, 161, 261, 361) arranged to be removably connected to said first element (51) by means of a fixing element (66) and comprising coffee packaging dependent means (61, 161, 261, 361) with a shape dependent from said alternative packaging types and being associated to said fixing element;
- realising a gasket (169, 269, 369) suitable to ensure sealing between said first element (51) and said coffee packaging dependent means (161, 261, 361), wherein said gasket is associated to said coffee packaging dependent means (161, 261, 361).

14. Method according to claim 13 **characterised in that** it further comprises the step of forming a filter-holder unit (70) having a filter-holder device (71) with a shape substantially independent from said alternative packaging types and arranged to be connected to said first element (51) of said head unit (50), wherein said step of forming a filter-holder unit (70) comprises also the step of forming a filtering element (181, 381) having a shape dependent from one of said alternative packaging types and arranged to be removably connected to said filter-holder device (71).

## Patentansprüche

1. Kaffeemaschine, die Folgendes umfasst
- mindestens einen, mindestens eine Flüssigkeit enthaltenden Kessel (12)
- mindestens eine, mit dem Kessel (12) verbundene Vorrichtung (14), die
- ein Kopfteil (50), und
- eine Filterhaltereinheit (70) aufweist, die so angeordnet ist, dass sie mit dem Kopfteil (50) zur Bildung einer Aufgusskammer verbunden wird,
- wobei die Aufgusskammer eine Substanz aufnehmen kann, die zur Herstellung eines Aufgusses geeignet ist,
- wobei diese Substanz in mindestens zwei verschiedenen Verpackungstypen vorliegt, die aus folgender Gruppe ausgewählt werden können
- Pulver im Beutel;
- Pulverpatrone;
- gepresstes Pulver;
wobei das Kopfteil (50) Folgendes umfasst
- ein erstes Element (51) mit einer von den alternativen Verpackungstypen im Wesentlichen unabhängigen Form;
- ein zweites Element (61, 161, 261, 361), das so angeordnet ist, dass es lösbar mittels eines Befestigungselements (66) an das erste Element (51) angeschlossen werden kann und das kaffeepackungsabhängige Mittel (161, 261, 361) aufweist, die eine von den mindestens zwei alternativen Verpackungstypen abhängige Form besitzen und die dem Befestigungselement zugeordnet sind,
**dadurch gekennzeichnet, dass** die kaffeepackungsabhängigen Mittel eine Dichtung (169, 269, 369) aufweisen, mit der zwischen dem ersten Element (51) und den kaffeepackungsabhängigen Mitteln (161, 261, 361) eine Abdichtung gewährleistet ist.

2. Maschine nach Anspruch 1,
**dadurch gekennzeichnet, dass** die Filterhaltereinheit (70) Folgendes umfasst
- eine Filterhaltereinrichtung (71) mit einer von den alternativen Verpackungstypen im Wesentlichen unabhängigen Form, die zum Anschluss an das erste Element (51) des Kopfteils (50) ausgebildet ist.

3. Maschine nach Anspruch 2,
**dadurch gekennzeichnet, dass** die Filterhaltereinheit (70)
- ein Filterelement (181, 381) aufweist, das lösbar mit der Filterhaltereinrichtung (71) verbunden ist und eine von den mindestens zwei alternativen Verpackungstypen abhängige Form hat.

4. Maschine nach einem der Ansprüche 1 bis 3,
**dadurch gekennzeichnet, dass**
- das erste Element (51) mindestens eine Durchgangsöffnung (57) aufweist sowie
- dass das Befestigungselement mindestens einen Zapfen (66) hat, der zur Befestigung am ersten Element in die mindestens eine Durchgangsöffnung steckbar ist.

5. Maschine nach einem der Ansprüche 1 bis 4,
**dadurch gekennzeichnet, dass** die Substanz Kaffee ist.

6. Vorrichtung für eine Kaffeemaschine (10), die Folgendes umfasst
- ein Kopfteil (50),
- eine zur Verbindung mit dem Kopfteil (50) angeordnete Filterhaltereinheit (70), um eine Aufgusskammer zu bilden,
- diese Aufgusskammer ist zur Aufnahme einer Substanz vorgesehen, mit der ein Aufguss hergestellt werden kann,
- diese Substanz ist in mindestens zwei verschiedenen Verpackungstypen vorgesehen, die wenigstens aus einer folgendermaßen zusammengestellten Gruppe ausgewählt werden kann
- Pulver im Beutel;
- Pulverpatrone;
- gepresstes Pulver;
wobei das Kopfteil (50) Folgendes aufweist
- ein erstes Element (51) mit einer von den alternativen Verpackungstypen im Wesentlichen unabhängigen Form;
- ein zweites Element (61, 161, 261, 361), das mittels eines Befestigungselements (66) lösbar mit dem ersten Element (51) verbindbar ist und das kaffeepackungsabhängige Mittel (161, 261, 361) aufweist, die eine von den alternativen Verpackungstypen abhängige Form aufweisen und die dem Befestigungselement zugeordnet sind,
**dadurch gekennzeichnet, dass** die kaffeepackungsabhängigen Mittel eine Dichtung (169, 269, 369) aufweisen, mit der die Abdichtung zwischen dem ersten Element (51) und den kaffeepackungsabhängigen Mitteln (161, 261, 361) gewährleistet werden kann.

7. Vorrichtung nach Anspruch 6,
**dadurch gekennzeichnet, dass** die Filterhaltereinheit (70) Folgendes umfasst
- eine Filterhaltereinrichtung (71), die eine von den alternativen Verpackungstypen im Wesentlichen unabhängigen Form hat, und die mit dem ersten Element (51) des Kopfteils (50) verbindbar ist.

8. Vorrichtung nach Anspruch 7,
**dadurch gekennzeichnet, dass** die Filterhaltereinheit (70)
- ein Filterelement (181, 381) aufweist, das so angeordnet ist, dass es lösbar mit der Filterhaltereinrichtung (71) verbindbar ist und eine von den alternativen Verpackungstypen abhängige Form hat.

9. Vorrichtung nach einem der Ansprüche 6 bis 8,
**dadurch gekennzeichnet, dass**
- das erste Element (51) mindestens eine Durchgangsöffnung (57) aufweist und
- dass das Befestigungselement mindestens einen Zapfen (66) hat, der zur Befestigung am ersten Element in die mindestens eine Durchgangsöffnung einführbar ist.

10. Vorrichtung nach einem der Ansprüche 6 bis 9,
**dadurch gekennzeichnet, dass** die Substanz Kaffee ist.

11. Kopfteil zum Zusammenwirken mit einer Filterhaltereinheit zur Bildung einer Aufgusskammer, die eine Substanz aufnehmen kann, die zur Herstellung eines Aufgusses geeignet ist und die in mindestens zwei verschiedenen Verpackungstypen vorhanden ist, die aus der folgenden Gruppe ausgewählt werden können
- Pulver im Beutel;
- Pulverpatrone;
- gepresstes Pulver;
wobei die Kopfeinheit Folgendes aufweist
- eine erstes Element (51) mit einer von den alternativen Verpackungstypen im Wesentlichen unabhängigen Form;
- ein zweites Element (61), das mittels eines Befestigungselements (66) lösbar mit dem ersten Element (51) verbindbar ist und das kaffeepackungsabhängige Mittel (161, 261, 361) aufweist, die eine von den mindestens zwei verschiedenen Verpackungstypen abhängige Form hat und die dem Befestigungselement zugeordnet sind,
**dadurch gekennzeichnet, dass** die kaffeepackungsabhängigen Mittel eine Dichtung (169, 269, 369) aufweisen, mit der die Abdichtung zwischen dem ersten Element (51) und den kaffeepackungsabhängigen Mitteln (161, 261, 361) gewährleistet werden kann.

12. Kopfteil nach Anspruch 11,
**dadurch gekennzeichnet, dass**
- das erste Element (51) mindestens eine Durchgangsöffnung (57) aufweist und
- dass das Befestigungselement mindestens einen Zapfen (66) hat, der zur Befestigung am ersten Element (51) in die mindestens eine Durchgangsöffnung einführbar ist.

13. Verfahren zur Herstellung einer Vorrichtung (14) für eine Kaffeemaschine, bei der eine Substanz verwendbar ist, die in mindestens zwei verschiedenen Verpackungstypen geliefert wird, die wenigstens aus der folgenden Gruppe auswählbar ist:
- Pulver im Beutel;
- Pulverpatrone;
- gepresstes Pulver;
mit den Verfahrensschritten
- Ausgestaltung eines Kopfteils (50) der Vorrichtung (14) durch
- Ausführung eines ersten Elements (51) mit einer von den alternativen Verpackungstypen im Wesentlichen unabhängigen Form, sowie
- Ausführung eines zweiten Elements (61, 161, 261, 361), das mittels eines Befestigungselements (66) lösbar mit dem ersten Element (51) verbindbar ist, und dass das zweite Element (61, 161, 261, 361) kaffeeverpackungsabhängige Mittel (61, 161, 261, 361) mit einer von den alternativen Verpackungstypen abhängigen Form aufweist, die dem Befestigungselement zugeordnet sind;
- Ausführung einer Dichtung (169, 269, 369), die zur Gewährleistung der Abdichtung zwischen dem ersten Element (51) und den kaffeeverpackungsabhängigen Mitteln (161, 261, 361) geeignet ist, wobei die Dichtung den kaffeeverpackungsabhängigen Mitteln (161, 261, 361) zugeordnet ist.

14. Verfahren nach Anspruch 13,
**dadurch gekennzeichnet, dass** es weiter den Verfahrensschritt der Ausbildung einer Filterhaltereinheit (70) mit einer Filterhaltereinrichtung (71) aufweist, die eine von den verschiedenen Verpackungstypen im Wesentlichen unabhängigen Form hat und mit dem ersten Element (51) der Kopfeinheit (50) verbindbar ist, wobei der Verfahrensschritt der Ausbildung einer Filterhaltereinheit (70) auch den Schritt der Ausbildung eines Filterelements (181, 381) mit einschließt, das eine von den alternativen Verpackungstypen abhängige Form hat und lösbar mit der Filterhaltereinrichtung (71) verbindbar ist.

## Revendications

1. Machine à infusion comprenant :
- au moins une chaudière (12) destinée à contenir au moins un liquide ;
- au moins un groupe d'alimentation (14) connecté à la chaudière (12) et comportant :
- une unité de tête (50), et
- une unité de support de filtre (70) disposée pour être raccordée à ladite unité de tête (50) en vue de former une chambre d'infusion,
- ladite chambre d'infusion étant apte à contenir une substance appropriée pour produire une infusion,
- ladite substance étant fournie dans au moins deux types différents d'emballage pouvant être sélectionnés dans le groupe formé par
- de la poudre en dosette ;
- de la poudre en cartouche ;
- de la poudre compactée ;
dans laquelle ladite unité de tête (50) comprend
- un premier élément (51) présentant une configuration essentiellement indépendante desdits types différents d'emballage ;
- un second élément (61, 161, 261, 361) agencé pour être raccordé de façon amovible audit premier élément (51) au moyen d'un élément de fixation (66) et comprenant des moyens dépendants de l'emballage du café (161, 261, 361) présentant une configuration dépendante de l'un desdits au moins deux types d'emballage différents et étant associés audit élément de fixation,
**caractérisée en ce que** lesdits moyens dépendants de l'emballage du café comportent une garniture d'étanchéité (169, 269, 369) appropriée pour assurer l'étanchéité entre ledit premier élément (51) et lesdits moyens dépendants de l'emballage du café (161, 261, 361).

2. Machine selon la revendication 1, **caractérisée en ce que** ladite unité de support de filtre (70) comprend
- un dispositif de support de filtre (71) présentant une configuration essentiellement indépendante desdits types d'emballage différents et agencés en vue d'être raccordés audit premier élément (51) de ladite unité de tête (50).

3. Machine selon la revendication 2 **caractérisée en ce que** ladite unité de support de filtre (70) comprend
- un élément de filtration (181, 381) agencé pour être raccordé de façon amovible audit dispositif de support de filtre (71), et présentant une configuration dépendant de l'un des dits au moins deux types d'emballage différents.

4. Machine selon l'une quelconque des revendications 1 à 3, **caractérisée en ce que**
- ledit premier élément (51) comporte au moins un trou de passage (57), et
- ledit élément de fixation comporte au moins une tige (66) agencée pour être insérée dans ledit au moins un trou de passage de façon à être fixée audit premier élément.

5. Machine selon l'une quelconque des revendications 1 à 4, **caractérisée en ce que** ladite substance est du café.

6. Groupe d'alimentation destiné à une machine à infusion (10) comportant :
une unité de tête (50),
- une unité de support de filtre (70) agencée pour être raccordée à ladite unité de tête (50) afin de former une chambre d'infusion,
- ladite chambre d'infusion étant apte à contenir une substance appropriée pour produire une infusion ;
- ladite substance étant fournie dans deux types au moins d'emballage différents pouvant être sélectionnés au moins à partir du groupe formé par :
- de la poudre en dosette ;
- de la poudre en cartouche ;
- de la poudre compactée ;
dans laquelle ladite unité de tête (50) comporte :
- un premier élément (51) présentant une configuration essentiellement indépendante des dits types d'emballage différents ;
- un second élément (61, 161, 261, 361) agencé de façon à être raccordé de façon amovible audit premier élément (51) au moyen d'un élément de fixation (66) et comprenant des moyens dépendants de l'emballage du café (161, 261, 361) présentant une configuration dépendante de l'un desdits types différents d'emballage et qui sont associés audit élément de fixation ; **caractérisé en ce que** lesdits moyens dépendants de l'emballage du café comportent une garniture d'étanchéité (169, 269, 369) appropriée pour assurer une étanchéité entre ledit premier élément (51) et lesdits moyens dépendants de l'emballage du café (161, 261, 361).

7. Groupe d'alimentation selon la revendication 6, **caractérisé en ce que** ladite unité de support de filtre (70) comprend
- un dispositif de support de filtre (71) présentant une configuration essentiellement indépendante desdits types différents d'emballage et agencé en vue d'être raccordé audit premier élément (51) de ladite unité de tête (50).

8. Groupe d'alimentation selon la revendication 7, **caractérisé en ce que** ladite unité de support de filtre (70) comporte
- un élément de filtration (181, 381) agencé pour être raccordé de façon amovible audit dispositif de support de filtre (71) et présentant une forme dépendante de l'un desdits types différents d'emballage.

9. Groupe d'alimentation selon l'une quelconque des revendications 6 à 8, **caractérisé en ce que**
- ledit premier élément (51) comporte au moins un trou de passage (57) et
- ledit élément de fixation comprend au moins une tige (66) agencée pour être insérée dans ledit au moins un trou de passage de façon à être fixée au dit premier élément.

10. Groupe d'alimentation selon l'une quelconque des revendications 6 à 9, **caractérisé en ce que** ladite substance est du café.

11. Unité de tête agencée pour coopérer avec une unité de support de filtre en vue de former une chambre d'infusion, dans laquelle ladite chambre d'infusion est apte à contenir une substance appropriée pour produire une infusion et dans laquelle ladite substance est fournie dans deux types au moins d'emballage différents pouvant être sélectionnés à partir du groupe formé par
- de la poudre en dosette ;
- de la poudre en cartouche ;
- de la poudre compactée ;
ladite unité de tête comportant :
- un premier élément (51) présentant une configuration essentiellement indépendante desdits types différents d'emballage ;
- un second élément (61), agencé pour être raccordé de façon amovible audit premier élément (51) au moyen d'un élément de fixation (66) et comprenant des moyens dépendants de l'emballage du café (161, 261, 361) présentant une configuration dépendante de l'un desdits deux types au moins d'emballage différents et qui sont associés audit élément de fixation ; **caractérisé en ce que** lesdits moyens dépendants de l'emballage du café comportent une garniture d'étanchéité (169, 269, 369) appropriée pour assurer une étanchéité entre ledit premier élément (51) et lesdits moyens dépendants de l'emballage du café (161, 261, 361).

12. Unité de tête selon la revendication 11 **caractérisée en ce que**
- ledit premier élément (51) comporte au moins un trou de passage (57) et
- ledit élément de fixation comporte au moins une tige (66) agencée pour être insérée dans ledit au moins un trou de passage en vue d'être fixée audit premier élément.

13. Procédé servant à fabriquer un groupe d'alimentation (14) destiné à une machine à infusion apte à utiliser une substance qui est fournie dans deux types au moins d'emballage différents, lesdits deux types d'emballage différents pouvant être sélectionnés au moins à partir du groupe formé par :
- de la poudre en dosette ;
- de la poudre en cartouche ;
- de la poudre compactée ;
comprenant les étapes consistant à :
- former une unité de tête (50) dudit groupe d'alimentation (14) en
- réalisant un premier élément (51) présentant une configuration essentiellement indépendante desdits différents types d'emballage, et
- réalisant un second élément (61, 161, 261, 361) agencé pour être raccordé de façon amovible audit premier élément (51) au moyen d'un élément de fixation (66) et comportant des moyens dépendants de l'emballage du café (61, 161, 261, 361) présentant une configuration dépendante desdits types d'emballage différents et qui sont associés audit élément de fixation ;
- réaliser une garniture d'étanchéité (169, 269, 369) appropriée pour assurer l'étanchéité entre ledit premier élément (51) et lesdits moyens dépendants de l'emballage du café (161, 261, 361), dans lequel ladite garniture d'étanchéité est associée aux dits moyens dépendants de l'emballage du café (161, 261, 361).

14. Procédé selon la revendication 13, **caractérisé en ce qu'**il comporte, de plus, l'étape consistant à former une unité de support de filtre (70) comportant un dispositif de support de filtre (71) présentant une configuration essentiellement indépendante desdits types d'emballage différents et agencé pour être raccordé audit premier élément (51) de ladite unité de tête (50), dans lequel ladite étape consistant à former une unité de support de filtre (70) comprend également l'étape consistant à former un élément de filtration (181, 381) présentant une configuration dépendante de l'un desdits différents types d'emballage et agencé pour être raccordé de façon amovible audit dispositif de support de filtre (71).
